(19) 

**Europäisches Patentamt**
**European Patent Office**
**Office européen des brevets**

(11) **EP 1 891 404 B1**

(12) **EUROPÄISCHE PATENTSCHRIFT**

(45) Veröffentlichungstag und Bekanntmachung des Hinweises auf die Patenterteilung:
**02.06.2010 Patentblatt 2010/22**

(21) Anmeldenummer: **06763642.3**

(22) Anmeldetag: **12.06.2006**

(51) Int Cl.:
*G01H 11/02* (2006.01) *G01H 11/06* (2006.01)

(86) Internationale Anmeldenummer:
**PCT/EP2006/063101**

(87) Internationale Veröffentlichungsnummer:
**WO 2006/134092 (21.12.2006 Gazette 2006/51)**

(54) **VIBRATIONSMESSSYSTEM**

VIBRATION MEASURING SYSTEM

SYSTEME DE MESURE DE VIBRATION

(84) Benannte Vertragsstaaten:
**DE FR**

(30) Priorität: **17.06.2005 DE 102005028214**

(43) Veröffentlichungstag der Anmeldung:
**27.02.2008 Patentblatt 2008/09**

(73) Patentinhaber: **SIEMENS AKTIENGESELLSCHAFT**
**80333 München (DE)**

(72) Erfinder:
• **MEHNER, Jan**
  **09221 Neukirchen (DE)**
• **MAKUTH, Jens**
  **90537 Feucht (DE)**
• **SCHEIBNER, Dirk**
  **90473 Nürnberg (DE)**

(56) Entgegenhaltungen:
**GB-A- 938 385      US-A- 2 979 959**
**US-A- 3 512 402      US-A- 3 930 405**
**US-B1- 6 199 874**

EP 1 891 404 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung betrifft ein Vibrationsmesssystem zur frequenzselektiven Schwingungsmessung.

Ein derartiges System kommt zum Beispiel in der Automatisierungs- und Antriebstechnik zum Einsatz und kann dort insbesondere zur Zustandsüberwachung verschleißbehafteter Komponenten eingesetzt werden. Darüber hinaus kann die Erfindung zur Überwachung von Fertigungsprozessen eingesetzt werden, die durch eine schwingende Umgebung gestört werden können. Ferner kann die Erfindung zur Charakterisierung schwingender Systeme und Komponenten eingesetzt werden.

Produktionsausfälle durch unerwartete Maschinendefekte können je nach Branche und Art des Prozesses direkte Schäden und Folgeschäden in erheblicher Höhe verursachen. Um die Zuverlässigkeit von Produktions- und Werkzeugmaschinen; verfahrenstechnischer Anlagen, Transportsystemen u. ä. zu erhöhen und somit Ausfallzeiten dieser Produktionsmittel zu reduzieren wird daher einer frühzeitigen Verschleiß- und Defekterkennung immer mehr Bedeutung beigemessen.

Beispielsweise bei elektrischen Maschinen kündigt sich ein Ausfall des Produktionsmittels oder einer seiner Komponenten (z. B. der Lager) häufig durch eine Veränderung des Schwingungsverhaltens an. Durch eine Vibrationsanalyse können diese Veränderungen detektiert werden. Auf diese Weise können betroffene Komponenten vorzeitig ausgetauscht werden, bevor es zum Ausfall des Gesamtsystems und somit zu einem längeren Produktionsstillstand kommt.

Je nach Frequenzbereich der relevanten Schwingungen können die Frequenzen selektiv gemessen werden oder breitbandig mit einer nachgeschalteten Fourieranalyse ermittelt werden. Mit frequenzselektiven Sensoren lassen sich aus technischen Gründen eher höherfrequente Schwingungen (> 1 kHz) analysieren. Niederfrequente Schwingungen (< 1kHz) werden heute in der Regel mit einem breitbandigen piezokeramischen Sensor erfasst. Die einzelnen Frequenzanteile werden anschließend mittels einer in Software oder Hardware ausgeführten Fast Fourier Transformation (FFT) aus dem Messsignal ermittelt.

Aus der US 6,199,874 B1 ist ein Beschleunigungssensor mit zwei mikromechanisch gefertigten Strukturen bekannt. Eine erste bewegliche Struktur des Sensors ist durch eine zu bestimmende Beschleunigungskraft gegenüber einer unbeweglichen Struktur des Sensors verschiebbar. Die beiden Strukturen bilden einen Kondensator, dessen Kapazität sich durch die Verschiebung ändert. Die Kapazitätsänderung bewirkt eine Ampli-, tudenmodulation eines zwischen den Strukturen angelegten Wechselspannungssignals, wobei aus dem amplitudenmodulierten Wechselspannungssignal durch geeignete Filterung bzw. Demodulation die anregende Beschleunigung ermittelt werden kann.

Aus der US 6,930,405 A ist ein Verfahren und ein System zur Messung von Körperschall bekannt. Um den von einen Objekt abgestrahlten Körperschall zu bestimmen, wird ein kapazitiver Wandler mit dem Objekt gekoppelt. Der kapazitive Wandle wird geladen und anschließend entladen, wobei die Ladung während des Entladevorgangs gemessen wird. Anhand von Schwingungen in der Entladungskurve kann Körperschall detektiert werden.

Aus der GB 938 385 A ist eine Vorrichtung mit einer Vielzahl von Kondensatoren bekannt, mit denen jeweils eine mechanische Anregung gemessen wird.

Aus der US 3,512,402 A ist eine kontaktlose Vorrichtung zur Vibrationsmessung an einem elektrisch leitenden Objekt bekannt. Zur Messung wird eine Spule in die Nähe eines schwingenden Objektes gebracht, wobei sich die Impedanz der Spule in Abhängigkeit des momentanen Abstandes zwischen Spule und Objekt verändert. Durch die Impedanzänderung wird ein in die Spule eingeprägter Wechselstrom amplitudenmoduliert.

Die US 2,979,959A offenbart eine Vorrichtung, mit der Beschleunigungen elektromagnetisch erfasst werden können.

Der Erfindung liegt die Aufgabe zu Grunde, eine kostengünstige Schwingungsanalyse zu ermöglichen.

Diese Aufgabe wird durch ein Vibrationsmesssystem gemäß Anspruch 1 gelöst.

Das erfindungsgemäße Vibrationsmesssystem nutzt zwei schwingfähige Strukturen. Die schwingfähige Senderstruktur wird direkt von dem Anregungssignal angeregt, dessen Amplitude durch das System bestimmt werden soll. Im Verhältnis zur Empfängerstruktur besitzt die Senderstruktur eine relativ geringe Resonanzfrequenz und arbeitet als breitbandiger Beschleunigungssensor. Der Erfindung liegt nun die Erkenntnis zugrunde, dass das zu bestimmende Anregungssignal durch eine geeignete Kopplung der Sender- und Empfängerstruktur in einen höheren Frequenzbereich transferiert werden kann. In dem höheren Frequenzbereich kann eine frequenzselektive Messung der Amplitude des Anregungssignals mit einfachen Mitteln kostengünstig realisiert werden. Sender- und Empfängerstruktur werden hierbei derart zueinander angeordnet, dass sich hinsichtlich der Frequenzen eine multiplikative Kopplung zwischen diesen beiden Strukturen ergibt. Auf eine sehr rechenaufwendige Fouriertransformation des Zeitsignals zur spektralen Auswertung kann hierdurch verzichtet werden.

Die Wirkungsweise des erfindungsgemäßen Vibrationssystems lässt sich wie folgt erläutern. Die Empfängerstruktur wird mit einem in der Regel hochfrequenten Trägersignal angeregt. Durch die Kopplung der Senderstruktur mit der Empfängerstruktur wird das Trägersignal mit dem Anregungssignal amplitudenmoduliert. Dies geschieht dadurch, dass die Senderstruktur auf die Empfängerstruktur eine Kraft ausübt, die abhängig von der Auslenkung der Senderstruktur in Relation zu ihrem Ruhezustand ist.

Durch die Modulation des Trägersignals mit dem Anregungssignal ist das Anregungssignal im Frequenzspektrum des Empfängers als linkes und rechtes Seitenband des Trägersignals wieder zu finden.

Insbesondere zur Zustandsüberwachung im Bereich der Automatisierungs- und Antriebstechnik liegen die relevanten Frequenzen im Bereich von wenigen Hertz bis hin zu 1 kHz. Daher ist es vorteilhaft, das Vibrationsmesssystem zur frequenzselektiven Bestimmung mechanischer Schwingungen vorzusehen, deren Frequenzen insbesondere kleiner als 1 kHz sind. Derartige Frequenzen sind mit herkömmlichen frequenzselektiven Messsystemen nicht bzw. nur mit sehr großem Aufwand erfassbar.

Durch eine vorteilhafte Ausführung des erfindungsgemäßen Vibrationsmesssystems, bei der die Trägerfrequenz größer als die Anregungsfrequenz ist, kann das eigentlich zu bestimmende Anregungssignal in einen höheren Frequenzbereich transferiert werden, in dem eine frequenzselektive Erfassung mit geringem Aufwand möglich ist.

Zweckmäßigerweise weist das Vibrationsmesssystem eine Vorrichtung zur Einstellung der Trägerfrequenz auf. Hierdurch kann der Spektralbereich, der zur Auswertung zur Verfügung steht, frei gewählt werden. Die Frequenz des Trägers wird zweckmäßiger Weise so gewählt, dass das linke oder rechte Seitenband auf einer Resonanzstelle des Empfängers liegt.

Durch die Amplitudenmodulation steht das auszuwertende Anregungssignal im Frequenzspektrum als linkes und rechtes Seitenband des amplitudenmodulierten Trägersignals zur Verfügung. Eine einfache Auswertung dieses Frequenzspektrums bzw. eine kostengünstige Extraktion des Anregungssignals kann dadurch realisiert werden, dass die Empfängerstruktur eine Resonanzfrequenz aufweist, die im Wesentlichen einem Seitenband des amplitudenmodulierten Trägersignals entspricht. Durch eine derartige Wahl der Resonanzfrequenz werden das entsprechende Seitenband und damit das transferierte Anregungssignal frequenzselektiv gefiltert. Die Frequenz des Trägers wird zweckmäßiger Weise hierbei so gewählt, dass das linke oder rechte Seitenband auf der Resonanzstelle des Empfängers liegt.

Um verschiedene Anregungsfrequenzen mit dem Vibrationssystem bestimmen zu können, ist es vorteilhaft, dass die Resonanzfrequenz der Empfängerstruktur einstellbar ist. Die Überlappung eines Seitenbandes des Trägersignals kann also alternativ durch ein Einstellen der Resonanzfrequenz des Empfängers oder durch ein Einstellen der Trägerfrequenz bewirkt werden.

Die Kopplung zwischen Empfängerstruktur und Senderstruktur kann auf verschiedene Art und Weise realisiert werden. Eine erste Ausführungsform ist derart gestaltet, dass die Empfängerstruktur eine kapazitive Kopplung zur Senderstruktur aufweist und eine Wechselspannung mit der Trägerfrequenz zwischen der Empfängerstruktur und der Senderstruktur anlegbar ist. Hierbei wird die für die Amplitudenmodulation benötigte Kraftkopplung auf elektrostatischem Wege erreicht.

Besonders wünschenswert ist hierbei eine Elektrodenanordnung, bei der die Kopplung der schwingfähigen Strukturen eine linear veränderliche Kraft erzeugt; d.h., dass die Kraft, die die Senderstruktur auf die Empfängerstruktur ausübt, linear von der Auslenkung der Senderstruktur abhängen soll. Um dies zu realisieren, sind die Empfänger- und Senderstruktur derartig auszuführen, dass sie zusammen eine Kapazität erzeugen, die eine quadratische Abhängigkeit von der der Auslenkung der Senderstruktur aufweist. Eine solche Kapazitätsauslenkungscharakteristik lässt sich beispielsweise dadurch erzeugen, dass Empfänger- und Senderstruktur jeweils eine kammartige Struktur aufweisen, wobei die kammartigen Strukturen zumindest teilweise ineinander greifend angeordnet sind. Bei einer derartigen Ausführung ist es ferner zweckmäßig, eine Auswertekamm vorzusehen, der zumindest teilweise in die kammartige Struktur der Empfängerstruktur greifend angeordnet ist. Mit Hilfe des Auswertekanals kann das Messsignal bzw. das transferierte Anregungssignal der Empfängerstruktur einfach entnommen werden.

Eine zweite Ausführungsform des erfindungsgemäßen Vibrationsmesssystems ist **dadurch gekennzeichnet, dass** die Empfängerstruktur eine induktive Kopplung zur Senderstruktur aufweist und ein Wechselstrom mit der Trägerfrequenz in die Empfängerstruktur und/oder die Senderstruktur einprägbar ist. Darüber hinaus kann die Senderstruktur auch einen Permanentmagneten umfassen, der eine Kraftwirkung auf die stromdurchflossene Empfängerstruktur ausübt. Ebenso ist es möglich, dass die Empfängerstruktur einen Permanentmagneten aufweist, der eine Kraftwirkung auf die stromdurchflossene Senderstruktur aufweist.

Unabhängig von der Art der Kraftkopplung zwischen Senderstruktur und Empfängerstruktur ist es zur Verbesserung des Signalrauschabstandes zweckmäßig, dass das Vibrationsmesssystem einen Verstärker zur Verstärkung eines Anteils im Spektrum des amplitudenmodulierten Trägersignals aufweist, wobei der Anteil im Wesentlichen mit der Resonanzfrequenz der Empfängerstruktur schwingt.

Zu Auswertungszwecken ist es vorteilhaft, wenn das Vibrationsmesssystem eine Auswerteeinrichtung zur Filterung und/oder Demodulation des amplitudenmodulierten Trägersignals aufweist.

Auf Grund der kostengünstigen Realisierbarkeit des Vibrationsmesssystems im Vergleich zu heutigen Vibrationsmesssystemen kann das Vibrationsmesssystem zur insbesondere permanenten Zustandsüberwachung von Produktionsmitteln vorgesehen werden. Da das Vibrationsmesssystem frequenzselektiv arbeitet, kann auf den erheblichen Hardware- bzw. Softwareaufwand zur Realisierung einer FFT, die bei breitbandigen Sensoren benötigt wird, verzichtet werden.

Eine alternative Anwendung des Vibrationsmesssystems ist **dadurch gekennzeichnet, dass** das Vibrationsmesssystem zur Überwachung eines vibrationsempfindlichen Produktionsprozesses vorgesehen ist. Auch hier kann eine permanente Überwachung von Schwingung mit Hilfe des Systems durchgeführt werden, die den korrekten Ablauf des Prozesses gefährden könnten.

Im Folgenden wird die Erfindung anhand der in den Figuren dargestellten Ausführungsbeispiele näher beschrieben und erläutert. Es zeigen:

FIG 1 ein Vibrationsmesssystem mit kapazitiver Kopplung

FIG 2 ein Frequenzspektrum des Vibrationsmesssystem mit kapa- zitiver Kopplung

FIG 3 ein Vibrationsmesssystem mit induktiver Kopplung.

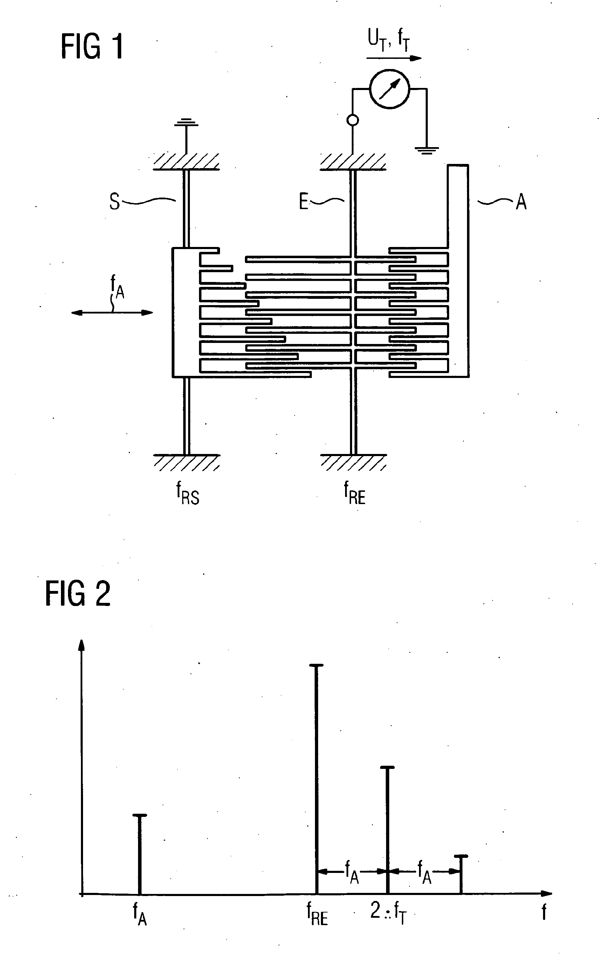

FIG 1 zeigt ein Vibrationsmesssystem mit kapazitiver Kopplung. Das Vibrationsmesssystem besteht aus drei kammartigen Strukturen S,E,A, die miteinander über elektrostatische Kräfte gekoppelt sind. Es sei angenommen, dass das dargestellte System zur Bestimmung von Vibrationen an elektrischen Antrieben vorgesehen ist, wobei sich die relevanten Schwingungen im Bereich von wenigen Hertz bis zu 1 kHz befinden.

Das Vibrationsmesssystem umfasst eine breitbandige Senderstruktur S mit einer Resonanzfrequenz $f_{RS}$ von 3 kHz. Der lineare Messbereich der Senderstruktur S reicht damit bis etwa 1 kHz. Diese Senderstruktur S wird direkt von einem mechanischen Anregungssignal, welches von dem elektrischen Antrieb ausgeht und mit der Frequenz $f_A$ schwingt, angeregt. Die kammartige Struktur der Senderstruktur S greift teilweise in eine ebenfalls kammartig ausgeführte Empfängerstruktur E, deren Resonanzfrequenz beispielsweise eine Dekade höher als die Anregungsfrequenz $f_A$, also bei 10 kHz, liegt.

Zwischen Empfängerstruktur E und Senderstruktur S ist eine Wechselspannung mit der Amplitude $U_T$ und der Frequenz $f_T$ angelegt. Diese Wechselspannung stellt das Trägersignal zur Verfügung, dass durch das Anregungssignal mit der Anregungsfrequenz $f_A$ moduliert wird.

Senderstruktur S und Empfängerstruktur E bilden also zusammen einen Kondensator an den die Spannung $U_T$ angelegt ist. Durch die dargestellte kammartige Ausführung dieser beiden Strukturen, wird erreicht, dass die Kapazität C dieses Kondensators quadratisch von der Auslenkung x der Senderstruktur S abhängt. Es gilt also:

$$C \sim x^2$$

Eine Ableitung dieser Beziehung ergibt:

$$\frac{dC}{dx} \sim 2x$$

Die Änderung der im Kondensator gespeicherten Energie W in Abhängigkeit der Auslenkung lässt sich mittels einer Energiebilanz ermitteln:

$$dW = \frac{1}{2}U_T^2 dC = Fdx$$

Schließlich ergibt sich ein Zusammenhang zwischen der elektrostatischen Kraft F und der Auslenkung x gemäß:

$$F = \frac{U_T^2}{2}\frac{dC}{dx} \sim U_T^2 \cdot x$$

Die quadratische Abhängigkeit des Kapazitätsverlaufs bewirkt also, dass eine multiplikative Kopplung zwischen dem Trägersignal und der Auslenkung x der Senderstruktur auftritt.

Das amplitudenmodulierte Trägersignal wird mit Hilfe eines Auswertekamms A ausgelesen und kann dort schließlich zu Verbesserung des Signal-Rausch Abstandes elektronisch verstärkt werden.

FIG 2 zeigt ein Frequenzspektrum des Vibrationsmesssystems mit kapazitiver Kopplung. Dargestellt sind Schwingungsamplituden über den entsprechenden Frequenzanteilen F. Durch die in FIG 1 dargestellte Kammstruktur kommt es zunächst zu einer Verdopplung der Trägerfrequenz. Wird beispielsweise eine Spannung mit der Trägerfrequenz $f_T$ an die Empfängerstruktur E angelegt, so wird dieses Signal durch die Quadrierung der Spannung bei elektrostatischer Kraftwirkung auf eine Frequenz $2f_T$ transferiert. Die Anregungsfrequenz $f_A$ des eigentlich relevanten Anregungssignals wird im Amplitudenspektrum auf das linke und rechte Seitenband des um die doppelte Trägerfrequenz ausgeprägten Spektrums abgebildet. Wurde beispielsweise eine Spannung mit der Trägerfrequenz $f_T$ von 5,1 kHz an die Empfängerstruktur E angelegt, und beträgt die Frequenz $f_A$ des Anregungssignals 200 Hz, so bildet sich ein Frequenzspektrum des Empfängers um 10,2 kHz aus mit einem linken Seitenband bei 10 kHz und einem rechten Seitenband bei 10,4 kHz. Um die Amplitude des mit 200 Hz schwingenden Anregungssignals zu bestimmen, wird nun die Resonanzfrequenz $f_{RE}$ der Empfängerstruktur E auf 10 kHz gelegt. Somit entspricht die Resonanzfrequenz $f_{RE}$ der Empfängerstruktur E dem linken Seitenband des dargestellten Frequenzspektrums. Hierdurch kommt es zu einer Resonanzerhöhung, wodurch das linke Seitenband verstärkt zur Auswertung zur Verfügung steht. Die eigentliche Auswertung des Signals erfolgt anschließend durch Filterung oder Demodulation dieses Seitenbandes.

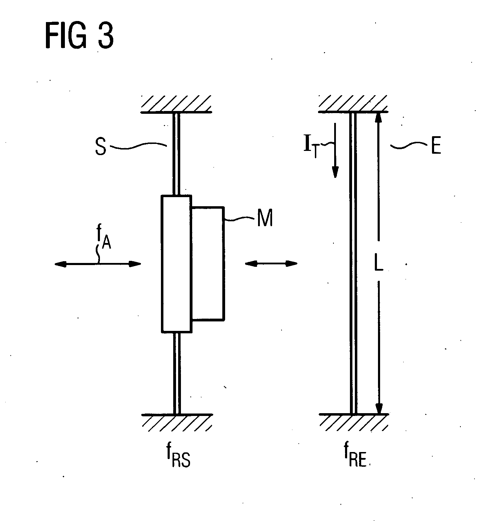

FIG 3 zeigt ein Vibrationsmesssystem mit induktiver Kopplung. In dem dargestellten Fall ist eine Senderstruktur S, die direkt von dem Anregungssignal mit einer Frequenz $f_A$ angeregt wird, mit einem Dauermagneten M ausgeführt. Die Senderstruktur S fungiert wiederum als breitbandiger Beschleunigungssensor und besitzt eine relativ niedrige Resonanzfrequenz $f_{RS}$. Eine Empfängerstruktur E des Vibrationsmesssystems mit einer um mindestens eine Dekade höher liegenden Resonanzfrequenz $f_{RE}$ ist als elektrischer Leiter der Länge L ausgeführt. In diesem elektrischen Leiter des Empfängers E wird ein Wechselstrom $I_T$ mit einer Trägerfrequenz $f_T$ eingeprägt. Durch das magnetische Feld des Dauermagneten M und das magnetische Feld, das der Trägerstrom $I_T$ innerhalb der Empfängerstruktur E erzeugt, wird eine elektromagnetische Koppelkraft der Größe $\boldsymbol{F = I \cdot L \cdot B}$ zwischen Senderstruktur S und Empfängerstruktur E erzeugt. Hierbei bezeichnet B die magnetische Feldstärke.

Alternativ zu der dargestellten Ausführungsform ist es natürlich auch denkbar und von der Erfindung umfasst, die Empfängerstruktur mit dem Permanentmagneten M auszuführen und den Trägerstrom $I_T$ in die Senderstruktur einzuprägen.

Die Wirkungsweise des dargestellten Vibrationsmesssystems mit induktiver Kopplung ist ähnlich zu der in FIG 1 dargestellten Struktur mit kapazitiver Kopplung. Es tritt jedoch im Vergleich zu der elektrostatischen Kopplung keine Frequenzverdopplung des Trägers auf, da bei der Kraftkopplung keine Quadrierung der Trägerfrequenz, sondern eine einfache Multiplikation vorliegt.

Zusammenfassend betrifft die Erfindung ein Vibrationsmesssystem zur frequenzselektiven Schwingungsmessung insbesondere niedriger Frequenzen wie sie im Bereich der Automatisierungs-und Antriebstechnik relevant sind. Um eine kostengünstige Schwingungsanalyse von Frequenzen im Bereich von 0 bis 1 kHz realisieren zu können, wird vorgeschlagen, eine breitbandige Senderstruktur, die direkt von dem zu bestimmenden Anregungssignal angeregt wird, über einen multiplikativ wirkenden Mechanismus, z.B. elektrostatische oder induktive Kräfte, mit einer Empfängerstruktur zu koppeln. Durch diese Kraftkopplung kommt es zu einer Amplitudenmodulation eines die Empfängerstruktur anregenden Trägersignals. Aus dem Spektrum des amplitudenmodulierten Trägersignals lässt sich das eigentliche Anregungssignal z.B. durch eine geeignete Wahl der Resonanzfrequenz der Empfängerstruktur und der Frequenz des Trägersignals extrahieren.

**Patentansprüche**

1. Vibrationsmesssystem mit einer schwingfähigen Senderstruktur (S), die von einem Anregungssignal zu einer mechanischen Schwingung einer Anregungsfrequenz ($f_A$) anregbar ist und derartig in Bezug auf eine von einem Trägersignal mit einer Trägerfrequenz ($f_T$) anregbaren schwingfähigen Empfängerstruktur (E) angeordnet ist, dass die Senderstruktur (S) in einem angeregten Zustand eine das Trägersignal amplitudenmodulierende, von der Auslenkung der Senderstruktur (S) abhängige Kraft auf die Empfängerstruktur (E) ausübt, wobei die Trägerfrequenz ($f_T$) und/oder die Resonanzfrequenz $f_{RE}$) der Empfängerstruktur (E) derart einstellbar sind, dass die Resonanzfrequenz ($f_{RE}$) im Wesentlichen einem Seitenband des amplitudenmodulierten Trägersignals entspricht.

2. Vibrationsmesssystem nach Anspruch 1, wobei das Vibrationsmesssystem zur frequenzselektiven Bestimmung mechanischer Schwingungen vorgesehen ist, deren Frequenzen insbesondere kleiner als 1 Kilohertz sind.

3. Vibrationsmesssystem nach Anspruch 1 oder 2, wobei die Trägerfrequenz ($f_T$) größer als die Anregungsfrequenz ($f_A$) ist :

4. Vibrationsmesssystem nach einem der Ansprüche 1 bis 3, wobei das Vibrationsmesssystem eine Vorrichtung zur Einstellung der Trägerfrequenz ($f_T$) aufweist.

5. Vibrationsmesssystem nach einem der Vorhergehenden Ansprüche, wobei die Empfängerstruktur (E) eine kapazitive Kopplung zur Senderstruktur (S) aufweist und eine Wechselspannung ($U_T$) mit der Trägerfrequenz ($f_T$) zwischen der Empfängerstruktur (E) und der Senderstruktur (S) anlegbar ist.

6. Vibrationsmesssystem nach Anspruch 5, wobei Empfänger- und Senderstruktur (E,S) derartig ausgeführt sind, dass sie zusammen eine Kapazität erzeugen, die eine quadratische Abhängigkeit von der Auslenkung der Senderstruktur (S) aufweist.

7. Vibrationsmesssystem nach einem der vorhergehenden Ansprüche, wobei Empfänger- und Senderstruktur (E,S) jeweils eine kammartige Struktur aufweisen, wobei die kammartigen Strukturen zumindest teilweise ineinander greifend angeordnet sind.

8. Vibrationsmesssystem nach Anspruch 7, wobei ein Auswertekamm (A) vorgesehen ist, der zumindest teilweise in die kammartige Struktur der Empfängerstruktur (E) greifend angeordnet ist.

9. Vibrationsmesssystem nach einem der vorhergehenden Ansprüche, wobei die Empfängerstruktur (E) eine induktive Kopplung zur Senderstruktur (S) aufweist und ein Wechselstrom mit der Trägerfrequenz (f$_T$) in die Empfängerstruktur (E) und/oder die Senderstruktur (S) einprägbar ist.

10. Vibrationsmesssystem nach einem der vorhergehenden Ansprüche,
wobei das Vibrationsmesssystem einen Verstärker zur Verstärkung eines Anteils im Spektrum des amplitudenmodulierten Trägersignals aufweist, wobei der Anteil im Wesentlichen mit der Resonanzfrequenz (f$_{RE}$) der Empfängerstruktur (E) schwingt.

11. Vibrationsmesssystem nach einem der vorhergehenden Ansprüche,
wobei das Vibrationsmesssystem eine Auswerteeinrichtung zur Filterung und/oder Demodulation des amplitudenmodulierten Trägersignals aufweist.

12. Vibrationsmesssystem nach einem der vorhergehenden Ansprüche, wobei das Vibrationsmesssystem zur insbesondere permanenten Zustandsüberwachung von Produktionsmitteln vorgesehen ist.

13. Vibrationsmesssystem nach einem der vorhergehenden Ansprüche, wobei das Vibrationsmesssystem zur Überwachung eines vibrationsempfindlichen Produktionsprozesses vorgesehen ist.

**Claims**

1. Vibration measuring system with a transmitting structure (S) which can vibrate and can be excited by an excitation signal to mechanically vibrate at an excitation frequency (f$_A$) and is arranged in such a way with regard to a receiving structure (E), which can vibrate and be excited by a carrier signal at a carrier frequency (f$_T$), that in an excited state the transmitting structure (S) exerts to the receiving structure (E) a force which modulates the amplitude of the carrier signal and is dependent on the excursion of the transmitting structure (S), wherein the carrier frequency (f$_T$) and/or the resonant frequency (f$_{RE}$) of the receiving structure (E) can be adjusted in such a way, that the resonant frequency (f$_{RE}$) essentially corresponds to a sideband of the amplitude-modulated carrier signal.

2. Vibration measuring system according to Claim 1, wherein the vibration measuring system is provided for the frequency-selective determination of mechanical vibrations, whose frequencies are, in particular, lower than 1 kilohertz.

3. Vibration measuring system according to Claim 1 or 2,
wherein the carrier frequency (f$_T$) is greater than the excitation frequency (f$_A$).

4. Vibration measuring system according to one of Claims 1 to 3,
wherein the vibration measuring system has an apparatus for adjusting the carrier frequency (f$_T$).

5. Vibration measuring system according to one of the preceding claims,
wherein the receiving structure (E) is capacitively coupled to the transmitting structure (S), and an AC voltage (U$_T$) at the carrier frequency (f$_T$) can be applied between the receiving structure (E) and the transmitting structure (S).

6. Vibration measuring system according to Claim 5, wherein the receiving and transmitting structures (E, S) are configured in such a way that together they create a capacitance which has a quadratic dependence on the excursion of the transmitting structure (S).

7. Vibration measuring system according to one of the previous claims,
wherein the receiving and transmitting structures (E, S) each have a comb-like structure, the comb-like structures being at least partly arranged in an interlocking fashion.

8. Vibration measuring system according to Claim 7, wherein an evaluation comb (A) is provided which is arranged in a fashion engaging at least partly in the comb-like structure of the receiving structure (E).

9. Vibration measuring system according to one of the preceding claims,
wherein the receiving structure (E) is inductively coupled to the transmitting structure (S), and an alternating current at the carrier frequency (f$_T$) can be impressed on the receiving structure (E) and/or the transmitting structure (S).

10. Vibration measuring system according to one of the preceding claims,
wherein the vibration measuring system has an amplifier for amplifying a component of the spectrum of the amplitude-modulated carrier signal, the component essentially vibrating at the resonant frequency (f$_{RE}$) of the receiving structure (E).

11. Vibration measuring system according to one of the preceding claims,
wherein the vibration measuring system has an evaluation device for filtering and/or demodulating the amplitude-modulated carrier signal.

12. Vibration measuring system according to one of the preceding claims,
wherein the vibration measuring system is provided, in particular, for permanently monitoring the state of production means.

13. Vibration measuring system according to one of the preceding claims,
wherein the vibration measuring system is provided for the monitoring of a vibration-sensitive production process.

**Revendications**

1. Système de mesure de vibrations comprenant une structure émettrice capable d'osciller (S) qui peut être excitée par un signal d'excitation pour osciller mécaniquement à une fréquence d'excitation ($f_A$) et est disposée par rapport à une structure réceptrice capable d'osciller (E) qui peut être excitée par un signal porteur ayant une fréquence porteuse ($f_T$) de manière à ce que la structure émettrice (S), dans un état excité, exerce sur la structure réceptrice (E) une force qui dépend de la déviation de la structure émettrice (S) et module en amplitude le signal porteur, la fréquence porteuse ($f_T$) et/ou la fréquence de résonance ($f_{RE}$) de la structure réceptrice (E) pouvant être réglées de manière à ce que la fréquence de résonance ($f_{RE}$) corresponde essentiellement à une bande latérale du signal porteur modulé en amplitude.

2. Système de mesure de vibrations selon la revendication 1, le système de mesure de vibrations étant prévu pour la détermination sélective en fréquence d'oscillations mécaniques dont les fréquences sont notamment inférieures à 1 kiloherz.

3. Système de mesure de vibrations selon la revendication 1 ou 2, la fréquence porteuse ($f_T$) étant supérieure à la fréquence d'excitation ($f_A$).

4. Système de mesure de vibrations selon l'une des revendications 1 à 3, le système de mesure de vibrations comprenant un dispositif de réglage de la fréquence porteuse ($f_T$) .

5. Système de mesure de vibrations selon l'une des revendications précédentes, la structure réceptrice (E) étant couplée capacitivement à la structure émettrice (S) et une tension alternative ($U_T$) à la fréquence porteuse ($f_T$) pouvant être appliquée entre la structure réceptrice (E) et la structure émettrice (S).

6. Système de mesure de vibrations selon la revendication 5, les structures réceptrice et émettrice (E, S) étant exécutées de manière à produire ensemble une capacité qui présente une dépendance quadratique de la déviation de la structure émettrice (S).

7. Système de mesure de vibrations selon l'une des revendications précédentes, les structures réceptrice et émettrice (E, S) comprenant à chaque fois une structure en peigne, les structures en peigne étant disposées de manière à être interdigitées, au moins partiellement, l'une dans l'autre.

8. Système de mesure de vibrations selon la revendication 7, un peigne d'analyse (A), qui est interdigité, au moins partiellement, dans la structure en peigne de la structure réceptrice (E), étant prévu.

9. Système de mesure de vibrations selon l'une des revendications précédentes, la structure réceptrice (E) étant couplée inductivement à la structure émettrice (S) et un courant alternatif à la fréquence porteuse ($f_T$) pouvant être appliqué dans la structure réceptrice (E) et/ou la structure émettrice (S).

10. Système de mesure de vibrations selon l'une des revendications précédentes, le système de mesure de vibrations comprenant un amplificateur pour amplifier une composante dans le spectre du signal porteur modifié en amplitude, la composante oscillant essentiellement à la fréquence de résonance ($f_{RE}$) de la structure réceptrice (E) .

11. Système de mesure de vibrations selon l'une des revendications précédentes, le système de mesure de vibrations comprenant un dispositif d'analyse pour le filtrage et/ou la démodulation du signal porteur modulé en amplitude.

12. Système de mesure de vibrations selon l'une des revendications précédentes, le système de mesure de vibrations étant prévu pour la surveillance d'état, notamment continue, de moyens de production.

13. Système de mesure de vibrations selon l'une des revendications précédentes, le système de mesure de vibrations étant prévu pour la surveillance d'un processus de production sensible aux vibrations.

## FIG 1

## FIG 2

# FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6199874 B1
- US 6930405 A
- GB 938385 A
- US 3512402 A
- US 2979959 A